(19) Europäisches Patentamt
European Patent Office
Office européen des brevets

(11) **EP 4 742 659 A1**

(12) **EUROPEAN PATENT APPLICATION**

(43) Date of publication:
**13.05.2026 Bulletin 2026/20**

(21) Application number: **24306876.4**

(22) Date of filing: **08.11.2024**

(51) International Patent Classification (IPC):
**H04N 19/11** (2014.01)  **H04N 19/176** (2014.01)
**H04N 19/593** (2014.01)

(52) Cooperative Patent Classification (CPC):
**H04N 19/11; H04N 19/176; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **UTIDA BARBOSA FERREIRA, Renan
MONTREAL, H1X3H7 (CA)**
• **BONNINEAU, Charles
MONTREAL, H2J 1G1 (CA)**
• **MARZUKI, Ismail
MONTREAL, H3J 1V4 (CA)**
• **PURI, Saurabh
SAINT-LAZARE, J7T 0P6 (CA)**

(74) Representative: **Interdigital
Immeuble ZEN 2
845 A, avenue des Champs Blancs
35510 Cesson-Sévigné (FR)**

(54) **DIMD WITH ALTERNATIVE FILTER KERNELS**

(57) A decoding method is disclosed. Gradients for a current block are first obtained by filtering samples in a neighboring template of the current block, wherein obtaining gradients for a current block comprises substituting at least one of a Sobel filter or an edge detection filter by a generic filter. A histogram of oriented gradients (HoG) is then obtained for the current block based on the gradients. An intra mode is selected for the current block based on the HoG. The current block is then decoded using the selected intra mode.

800

obtaining gradients for a current block by filtering samples in a neighboring template of the current block, wherein obtaining gradients for a current block comprises substituting at least one of a Sobel filter or an edge detection filter by a generic filter — 802

obtaining a histogram of oriented gradients (HoG) for a current block based on the gradients — 804

selecting an intra mode for the current block based on the HoG — 806

decoding the current block using the selected intra mode — 808

**FIG. 8**

EP 4 742 659 A1

## Description

### BACKGROUND

The present application is related to a method and an apparatus for intra prediction in video encoding and decoding.

### BRIEF SUMMARY

Briefly stated, in one embodiment a decoding method is presented. Gradients for a current block are obtained by filtering samples in a neighboring template of the current block, wherein obtaining gradients for a current block comprises substituting at least one of a Sobel filter or an edge detection filter by a generic filter. A histogram of oriented gradients (HoG) is then obtained for the current block based on the gradients. An intra mode is selected for the current block based on the HoG. The current block is then decoded using the selected intra mode.

In another embodiment, a decoding apparatus comprising one or more processors and at least one memory coupled to said one or more processors is presented. The one or more processors are configured to perform obtaining gradients for a current block by filtering samples in a neighboring template of the current block, wherein obtaining gradients for a current block comprises substituting at least one of a Sobel filter or an edge detection filter by a generic filter; obtaining a histogram of oriented gradients (HoG) for the current block based on the gradients ; selecting an intra mode for the current block based on the HoG; and decoding the current block using the selected intra mode.

In one embodiment an encoding method is presented. Gradients for a current block are obtained by filtering samples in a neighboring template of the current block, wherein obtaining gradients for a current block comprises substituting at least one of a Sobel filter or an edge detection filter by a generic filter. A histogram of oriented gradients (HoG) is then obtained for the current block based on the gradients. An intra mode is selected for the current block based on the HoG. The current block is then encoded using the selected intra mode.

In another embodiment, an encoding apparatus comprising one or more processors and at least one memory coupled to said one or more processors is presented. The one or more processors are configured to perform obtaining gradients for a current block by filtering samples in a neighboring template of the current block, wherein obtaining gradients for a current block comprises substituting at least one of a Sobel filter or an edge detection filter by a generic filter; obtaining a histogram of oriented gradients (HoG) for the current block based on the gradients ; selecting an intra mode for the current block based on the HoG; and encoding the current block using the selected intra mode.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 depicts a template (set of chosen pixels) on which a gradient analysis is performed;
FIG. 5 illustrates convolution of the 3x3 Sobel gradient filter with a template;
FIG. 6 illustrates the current set of filters used by DIMD in ECM-13.0 ;
FIG. 7 illustrates DIMD design for small blocks ;
FIG. 8 is a block diagram illustrating an example decoding method according to one or more embodiments of the present disclosure; and
FIG. 9 is a block diagram illustrating an example encoding method according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

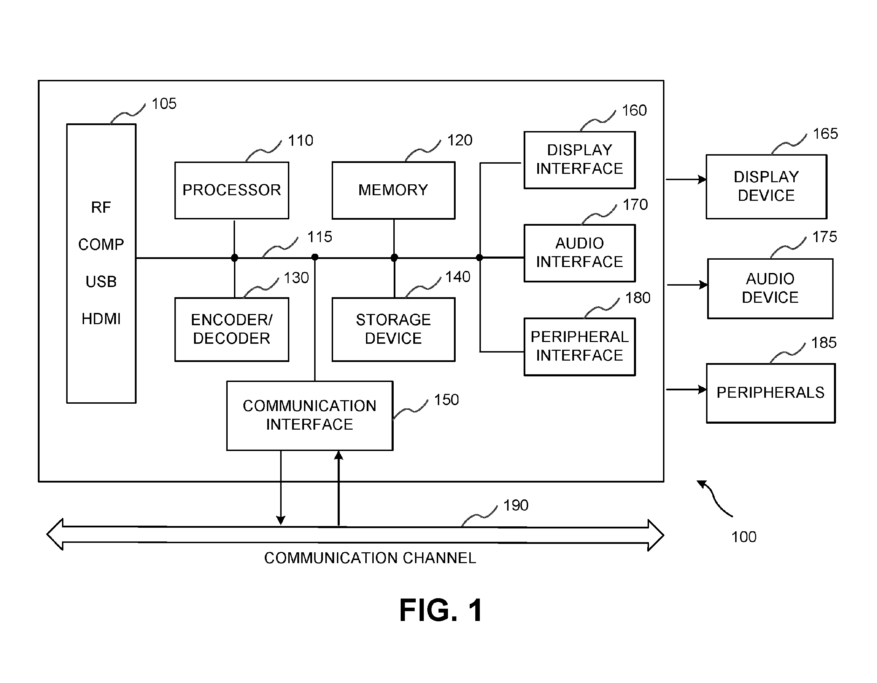

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

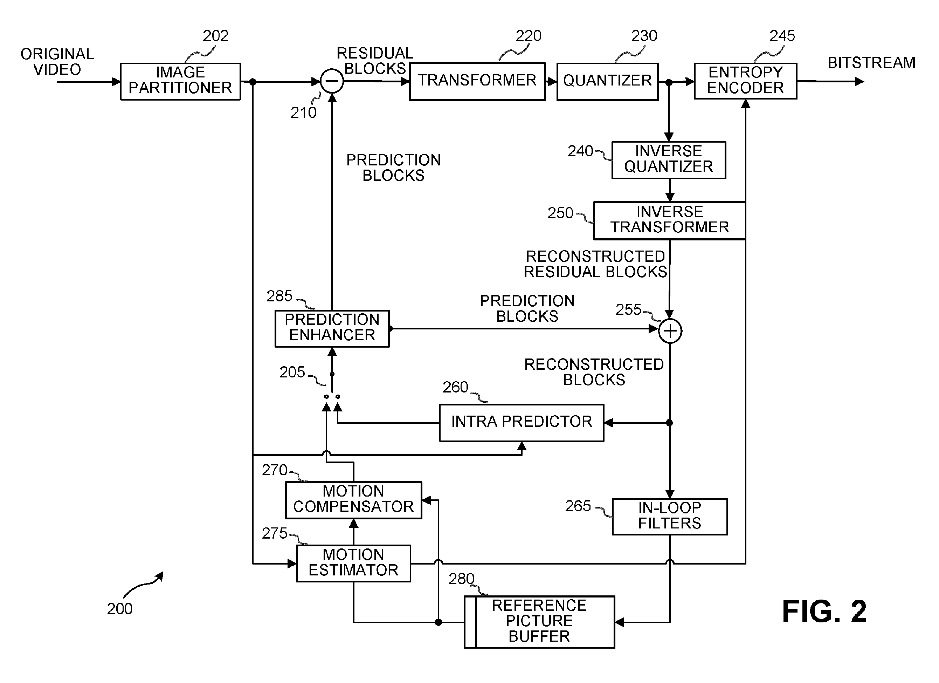

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

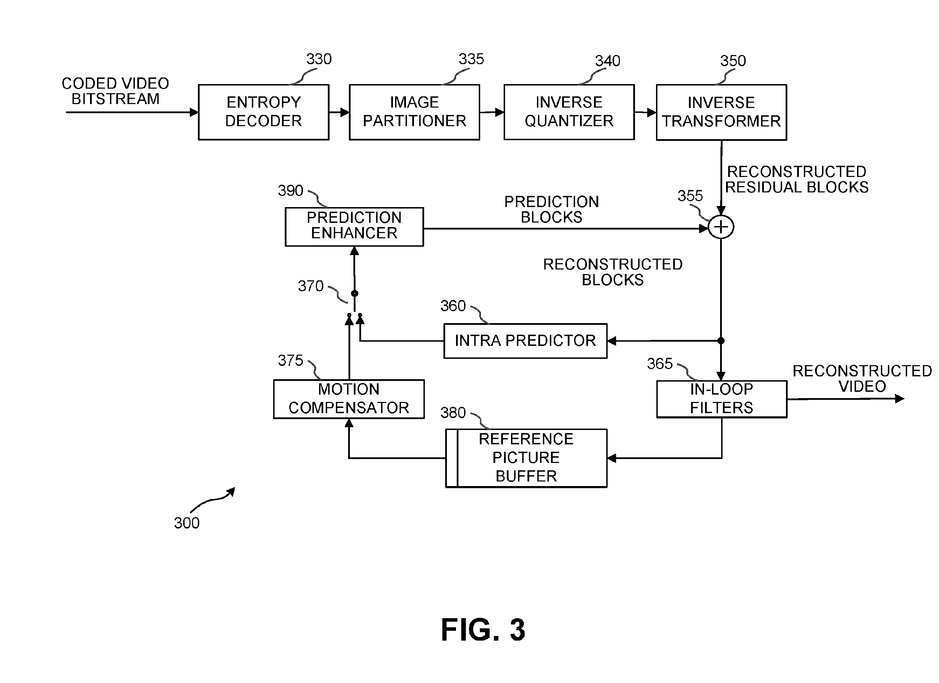

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

As explained previously, a CU may be encoded using an intra prediction mode, e.g., performed by an intra predictor. Decoder-Side Intra Mode Derivation (DIMD) is an example of a process for intra mode derivation that relies on the assumption that the decoded pixels (e.g., samples) surrounding a given block to be predicted carries information to infer the texture directionality in this block, i.e., the intra prediction modes that most likely generate the predictions with the highest qualities.

The inference of the indices of the intra prediction modes that most likely generate the predictions of highest qualities according to DIMD is decomposed into three steps. First, gradients are extracted from a context, e.g., a L-shape template, of decoded pixels around a given block to be predicted for encoding or decoding. Then, these gradients are used to fill a Histogram of Oriented Gradients (HOG). Finally, the indices of the intra prediction modes that most likely give the predictions with highest qualities are derived from this HOG, and a blending may be performed. A blending is for example a weighted sum of the predictions.

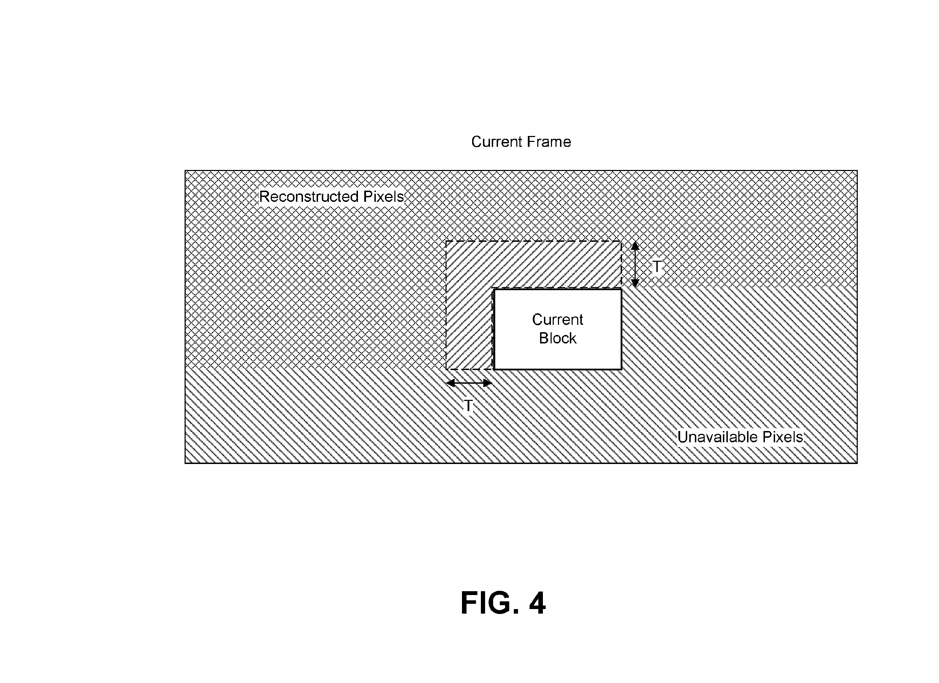

To derive the intra prediction mode for a block, a set of neighboring pixels (a.k.a. a template) may be selected, and a gradient analysis may be performed on the set of neighboring pixels. In an example, the pixels of the set may be in the decoded / reconstructed pool of pixels. In an example shown on **FIG. 4**, the set of neighboring samples is a template surrounding the current block by T pixels to the left, and T pixels above, e.g., T is set to 2. These set of neighboring samples belongs to a picture part of already reconstructed pixels as illustrated on FIG. 4.

Next, a gradient analysis may be performed on the pixels (e.g., samples) of the template. This allows to determine a main angular direction for the template. This angular direction is assumed to have a high probability to be identical to the one of the current block. Thus, a simple 3x3 Sobel gradient filter may be used, e.g., defined by the following matrices that will be convoluted with the template:

$$G_x = \begin{bmatrix} -1 & 0 & 1 \\ -2 & 0 & 2 \\ -1 & 0 & 1 \end{bmatrix} \quad \text{and} \quad G_y = \begin{bmatrix} -1 & -2 & -1 \\ 0 & 0 & 0 \\ 1 & 2 & 1 \end{bmatrix}$$

For a (e.g., each) pixel of the template, each of these two matrices are point-by-point multiplied with a 3x3 window centered on the current pixel and composed of its direct neighbors (e.g., its 8 direct neighbors in case of a 3x3 window), and the results of the point-by-point multiplication are summed to obtain $M_x$ (from the multiplication with $G_x$), and $M_y$ (from the multiplication with $G_y$). Thus, the two values $M_x$ (from the multiplication with $G_x$), and $M_y$ (from the multiplication with $G_y$) correspond to the gradients at the current pixel, in the horizontal and vertical directions respectively.

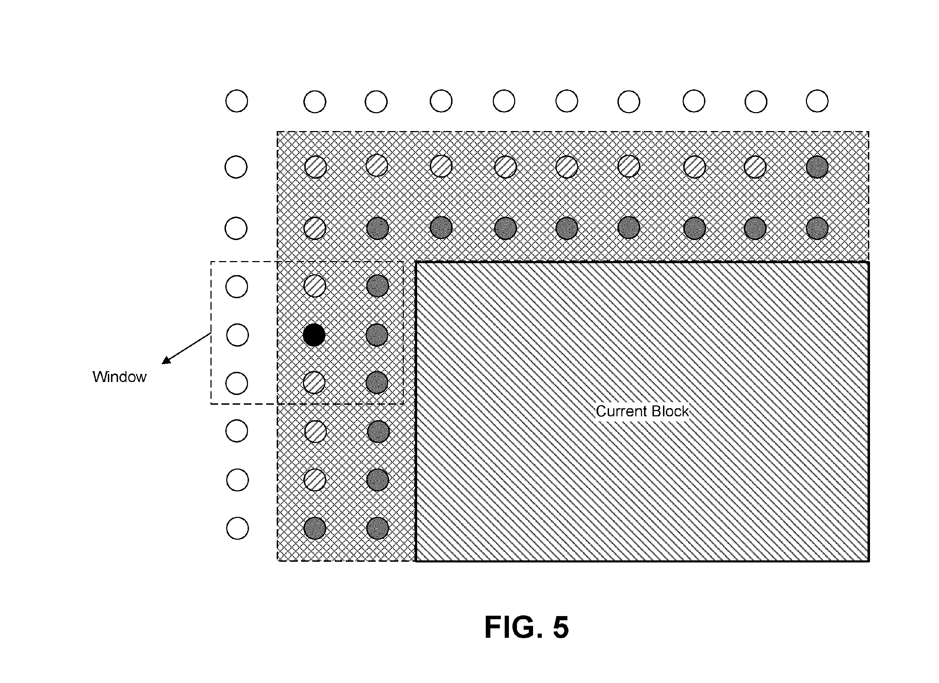

**FIG. 5** illustrates the convolution process. The black pixel is the current pixel. Hatched pixels (including the black one) are pixels on which gradient analysis is possible. Gray pixels are pixels on which the gradient analysis is not possible due to lack of some neighbors. White pixels are available (reconstructed) pixels outside of the considered template and used in the gradient analysis of the hatched pixels. In case a white pixel is not available (e.g., due to blocks being too close to the border of the picture), the gradient analysis of a (e.g., all) hatched pixel that uses this white pixel is not performed.

Then, these gradients are used to fill a Histogram of Oriented Gradients (HoG). For a (e.g., each) hatched pixel, the intensity (M) and the orientation (O) of the gradient may be computed using $M_x$ and $M_y$ as follows:

$$M = |M_x| + |M_y| \text{ and } O = \operatorname{atan}\left(\frac{M_y}{M_x}\right)$$

A fast implementation of the *atan* function may be used. The orientation O of the gradient may then be converted into an intra angular prediction mode, used to index a histogram (first initialized to zero). The histogram value at that intra angular mode is increased by M. Once all the hatched pixels in the template have been processed, the histogram will contain cumulative values of gradient intensities, for each intra angular mode.

Finally, the mode that shows the highest peak in the histogram may be selected as intra prediction mode for the current block. If the maximum value in the histogram is 0 (meaning no gradient analysis was able to be made, or the area composing the template is flat), then a DC mode may be selected as intra prediction mode for the current block.

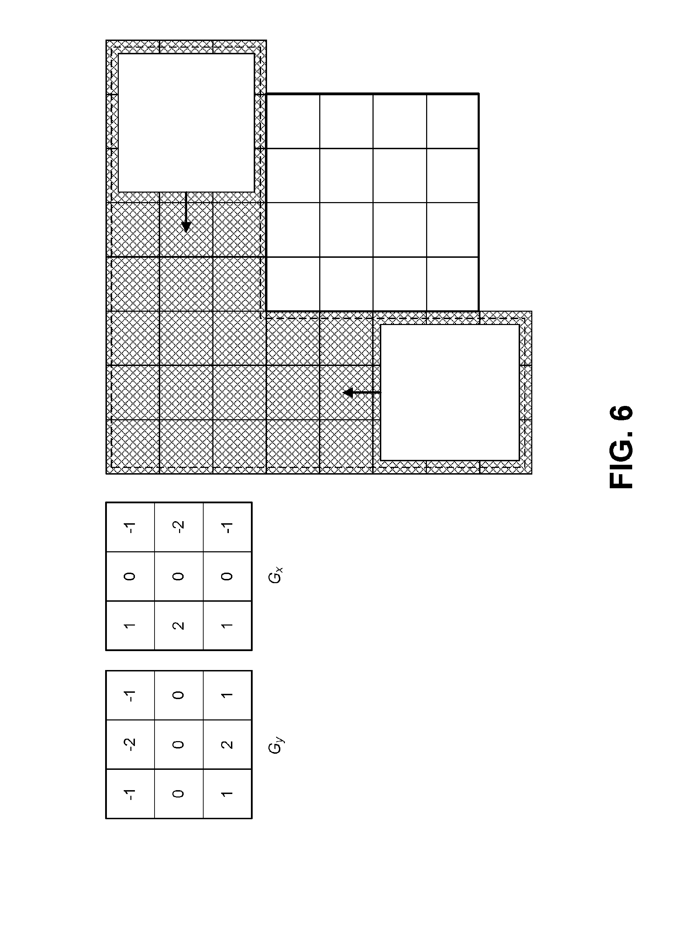

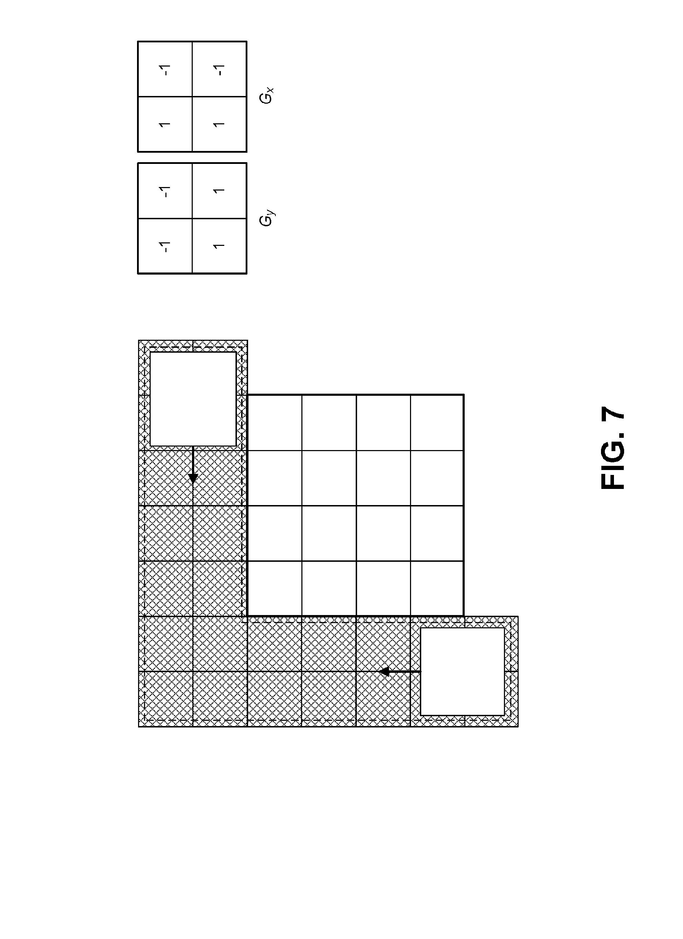

Using a 3x3 Sobel filter to build the HoG of the current block's template may not be necessary in all the cases. Edge detection filters (e.g., 2x2 edge detection filters) may be used to compute the HoG, e.g., to reduce the number of operations to be perform and thus the DIMD runtime. These new filters may be only applied to some small block size (i.e., 8x4, 4x8 and 4x4) to limit the impact on the performance. **FIG. 6** shows the current set of filters used by DIMD, e.g., in ECM-13.0 and **FIG. 7** shows 2x2 edge detection filters to compute the DIMD HoG for small blocks.

As explained previously, 3x3 Sobel filters may be used to build the histogram of gradients (HoG) in DIMD. However, such Sobel filters may not be adapted to every type of texture in the template of the current block. The intra prediction part on both encoder and decoder sides may thus be improved by using different types of filters to compute the gradients in decoder-side intra mode derivation (DIMD). More generally, a custom set of filters (e.g., filter kernels commonly used in edge detection besides Sobel kernels) may be used to build the HoG in DIMD. Therefore, the accuracy of the HoG and thus of the derived intra mode in DIMD is increased, which improves the coding efficiency.

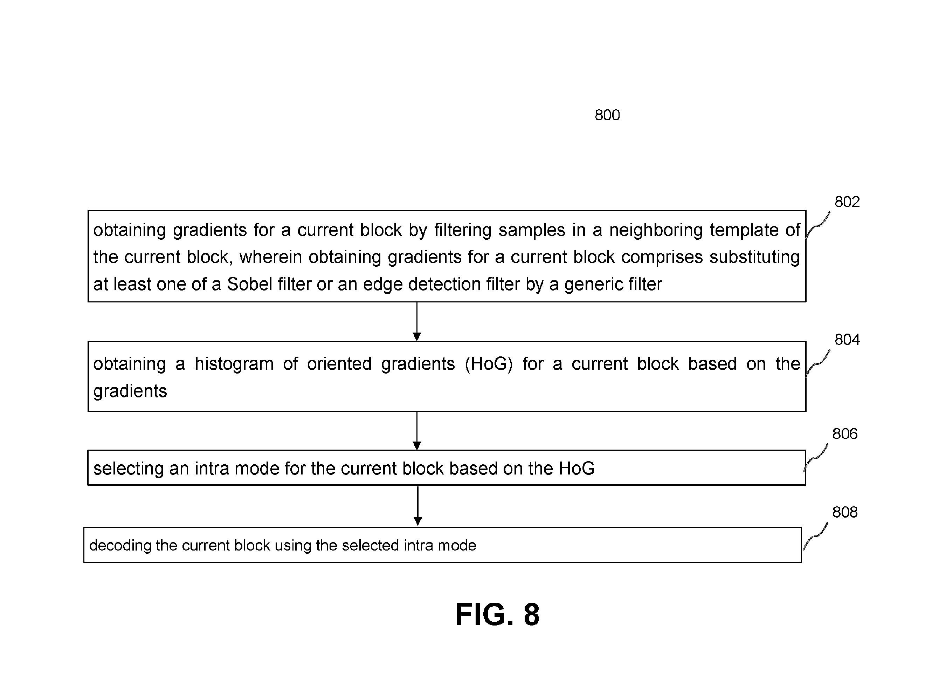

**FIG. 8** is a block diagram illustrating an example of a decoding method 800 according to an embodiment. Gradients (e.g., oriented gradients) are obtained (802) for a current block by filtering samples in a neighboring template of a current block to be decoded. The method illustrated on FIG. 5 may be used wherein either the Sobel filter or the 2x2 edge detection filter is substituted by a generic filter.

The parameters (e.g., the coefficients) of the generic filter may be derived from a bitstream. For example, the parameters are decoded (e.g., directly decoded) from the bitstream. In a variant, the generic filter kernel is obtained from a LUT comprising a plurality of filter kernels. In an example, one kernel in the LUT is identified by an index P decoded from the bitstream. The parameters (e.g., the coefficients) of the generic filter or the index P may be signaled in (e.g., decoded from) a picture parameter set (PPS) or from a sequence parameter set (SPS). In another example, a flag is decoded (e.g., from a bitstream) that indicates whether the Sobel filter is to be substituted by the generic filter and responsive to a determination that the Sobel filter is to be substituted by the generic filter, at least another flag is decoded (e.g., from the bitstream) that indicates whether parameters of the generic filter are signaled in the bitstream or whether an entry (e.g., an index P) of a LUT is signaled in the bitstream that identifies a particular filter kernel.

A histogram of oriented gradients (HoG) is then obtained (804) for the current block based on the gradients. The method described previously with Sobel filter may be applied. Therefore, the orientation O of the gradient is obtained which may be converted into an intra angular prediction mode, used to index a histogram. The histogram value at that intra angular mode may be increased by M.

An intra mode is selected (806) for the current block based on the HoG. For example, the mode that shows the highest peak (highest magnitude) in the histogram is selected as intra prediction mode for the current block.

The current block is decoded (808) using the selected intra mode.

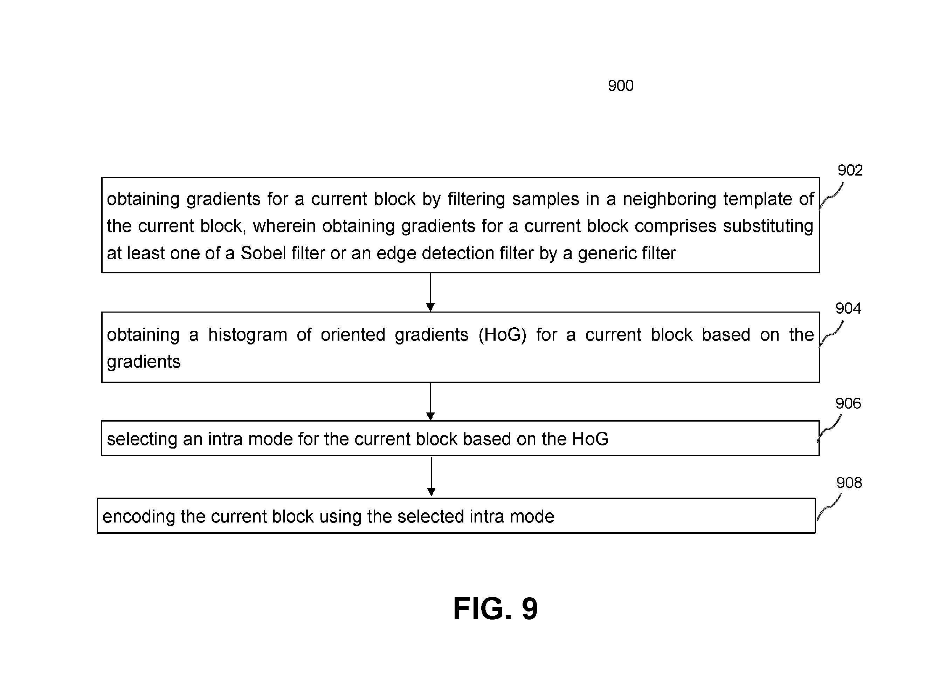

**FIG. 9** is a block diagram illustrating an example of an encoding method 900. Gradients (e.g., oriented gradients) are obtained (902) for a current block by filtering samples in a neighboring template of a current block to be encoded. The method illustrated on FIG. 5 may be used wherein either the Sobel filter or the 2x2 edge detection filter is substituted by a generic filter. The parameters (e.g., the coefficients) of the generic filter may be signaled in a bitstream. For example, the parameters are encoded (e.g., directly encoded) in the bitstream. In a variant, the generic filter kernel is obtained from a LUT comprising a plurality of filter kernels. In an example, the kernel in the LUT to be used for the current block may be identified by an index P and the index P may be signaled (e.g., encoded) in the bitstream. The parameters (e.g., the coefficients) of the generic filter or the index P may be signaled (e.g., encoded) in a picture parameter set (PPS) or in a sequence parameter set (SPS). In an example, a flag is encoded (e.g., in a bitstream) that indicates whether the Sobel filter is to be substituted by the generic filter and responsive to a determination that the Sobel filter is to be substituted by the generic filter, at least another flag is encoded (e.g., in the bitstream) that indicates whether parameters of the generic filter are signaled (e.g., encoded) in the bitstream or whether an entry (e.g., an index P) of a LUT is signaled (e.g., encoded) in the bitstream that identifies a particular filter kernel of the LUT.

A histogram of oriented gradients (HoG) is then obtained (904) for the current block based on the gradients. The method described previously with Sobel filter may be applied. Therefore, the orientation O of the gradient is obtained which may be converted into an intra angular prediction mode, used to index a histogram. The histogram value at that intra angular mode may be increased by M.

An intra mode is selected (906) for the current block based on the HoG. For example, the mode that shows the highest peak (highest magnitude) in the histogram is selected as intra prediction mode for the current block.

The current block is encoded (908) using the selected intra mode.

The various embodiments described below may apply to both the decoding method illustrated by FIG. 8 and the encoding method illustrated by FIG. 9.

In a first embodiment, the Sobel filter used for gradient derivation in DIMD may be substituted by a generic filter in the form

$$G_x = \begin{bmatrix} -a & 0 & a \\ -b & 0 & b \\ -a & 0 & a \end{bmatrix} \quad \text{and} \quad G_y = \begin{bmatrix} -a & -b & -a \\ 0 & 0 & 0 \\ a & b & a \end{bmatrix}$$

where values $a$ and $b$ are unsigned integer values.

In a variant, $a$ and $b$ may be transmitted (e.g., signaled) to the decoder, e.g., in a picture parameter set (PPS) or in a sequence parameter set (SPS).

In a variant, if 2×2 filter kernels are used for DIMD, they may be substituted by filters $G_x$ and $G_y$, in the form

$$G_x = \begin{bmatrix} c & d \\ e & f \end{bmatrix} \text{ and } G_y = \begin{bmatrix} e & c \\ f & d \end{bmatrix},$$

where $c$, $d$, $e$ and $f$ are unsigned integer values.

In a variant, $c$, $d$, $e$ and $f$ may be signaled to the decoder as PPS or SPS parameters.

In a variant, the value of a and b or c, d, e and f may be different based on the block size.

In the ECM, multiple transform selection (MTS) and low-frequency non-separable transform (LFNST)/non-separable primary transform (NSPT). NSPT may assign a transform set to the current residual block based on its intra prediction mode using a lookup-table (LUT). However, some special intra-modes, such as intra template matching prediction (intraTMP), matrix-based intra prediction (MIP), and extrapolation-based intra prediction (EIP), do not have a valid intra mode index to be passed to the LUT. Then, these modes rely on a virtual intra prediction mode (VIPM), obtained from the HoG computed by DIMD, to be used as input to the LUT. The optimal type of kernel to be used may differ depending on whether the actual DIMD mode is performed or if the VIPM is computed to derive the transform set. In a variant of the first embodiment, it is thus proposed to use the new generic filters (e.g., parametric kernels) only to compute the VIPM and keep the kernels unchanged for DIMD.

In another variant of this embodiment, the new generic filters (e.g., parametric kernels) are used to perform the DIMD mode while the kernels used to compute the VIPM remain unchanged.

In another variant, the values of a and b or c, d, e and f are different for each intra prediction mode when computing the VIPM. For instance, the values of a and b or c, d, e and f are different whether the VIPM is computed for MIP, EIP or intraTMP.

In a second embodiment, the Sobel filter may be substituted by a preset filter kernel, e.g., coded in a look-up table (LUT), both in the encoder and in the decoder. In an example, the LUT may be set to comprise a fixed number of preset kernels (e.g., filter kernels). The LUT entry $P$, indicating which filter to be used, must be signaled to the decoder, e.g. as a PPS or a SPS parameter. An example of a LUT is illustrated in Table 1, where $G_x^T$ is the transposed matrix of $G_x$ and $G_x^R$ is a rotation of $G_x$ by -90°.

**Table 1- Example of LUT**

| P (entry) | kernels |
|---|---|
| 0 | $G_x = \begin{bmatrix} -3 & 0 & 3 \\ -10 & 0 & 10 \\ -3 & 0 & 3 \end{bmatrix}$ and $G_y = G_x^T$ |
| 1 | $G_x = \begin{bmatrix} -47 & 0 & 47 \\ -162 & 0 & 162 \\ -47 & 0 & 47 \end{bmatrix}$ and $G_y = G_x^T$ |
| 2 | $G_x = \begin{bmatrix} -1 & 1 \\ -1 & 1 \end{bmatrix}$ and $G_y = G_x^T$ |
| 3 | $G_x = \begin{bmatrix} -1 & 0 \\ 0 & 1 \end{bmatrix}$ and $G_y = G_x^{RT}$ |

In a variant, the substituted kernels may be only used for some block sizes.

The variants from the first embodiment also apply to the second embodiment. Specifically, the variants wherein different kernels are used for DIMD mode and VIPM computation. In an example, the new parametric kernels are used only to compute the VIPM and while the kernels used to compute the DIMD remain unchanged. In another variant, the new parametric kernels are used to perform the DIMD mode while the kernels used to compute the VIPM remain unchanged, e.g., classical kernels (i.e., 3x3 Sobel and 2x2 edge detection filters) are used.

In a third embodiment that may be combined with both the first and second embodiments, the signaling of the substitution of the Sobel filter may be signaled (e.g., informed) by new flags and parameters (e.g., new syntax elements). First, a flag UseAltemativeKemel may be set (e.g., encoded decoded). If UseAltemativeKernel=0, no change is applied to the use of Sobel filters. If UseAlternativeKernel=1, anew flag UsePresetAlternativeKernel may be signaled (e.g., informed).

If UsePresetAlternativeKernel=O, the unsigned integers values a and b (and possibly also c, d, e and f) presented in the first embodiment may be signaled. If UsePresetAlternativeKemel=1, the LUT entry value P (and possibly also $P_2$) used in the second embodiment may be signaled. The value of the flags are only provided as examples. Other convention may be used, for example, if UsePresetAlternativeKernel=1, the unsigned integers values a and b (and possibly also c, d, e and f) presented in the first embodiment may be signaled. If UsePresetAlternativeKemel=0, the LUT entry value P (and possibly also P2) used in the second embodiment may be signaled.

In a variant, UseAlternativeKernel and UsePresetAlternativeKernel may be signaled as a SPS or a PPS level flags.

A computer program is also disclosed that comprises program code instructions for implementing the decoding method or the encoding method when executed by a processor.

A computer readable storage medium is also disclosed that has stored thereon instructions for implementing the decoding method or the encoding method.

A signal comprising video data, formed by performing the encoding method is disclosed. The signal may comprise flags, e.g., UseAlternativeKernel and UsePresetAlternativeKernel.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.   A decoding method comprising:

   obtaining gradients for a current block by filtering samples in a neighboring template of the current block, wherein obtaining gradients for a current block comprises substituting at least one of a Sobel filter or an edge detection filter by a generic filter;
   obtaining a histogram of oriented gradients (HoG) for the current block based on the gradients ;
   selecting an intra mode for the current block based on the HoG; and
   decoding the current block using the selected intra mode.

2.   A decoding apparatus comprising one or more processors and at least one memory coupled to said one or more processors, wherein said one or more processors are configured to perform :

   obtaining gradients for a current block by filtering samples in a neighboring template of the current block, wherein obtaining gradients for a current block comprises substituting at least one of a Sobel filter or an edge detection filter by a generic filter;
   obtaining a histogram of oriented gradients (HoG) for the current block based on the gradients ;
   selecting an intra mode for the current block based on the HoG; and
   decoding the current block using the selected intra mode.

3.   The method of claim 1 or apparatus of claim 2, wherein parameters of the generic filter are decoded from a picture parameter set (PPS) or from a sequence parameter set (SPS).

4.   The method of claim 1 or 3 or the apparatus of claim 2 or 3, wherein parameters of the generic filter are dependent on a size of the current block.

5.   The method of claim 1 or 3 or the apparatus of claim 2 or 3, wherein parameters of the generic filter are different for each intra prediction mode in case of a virtual intra prediction mode (VIPM).

6. The method of any one of claims 1, 3 to 5 or the apparatus of any one of claims 2 to 5, wherein substituting at least one of a Sobel filter or an edge detection filter by a generic filter only applies to obtain a virtual intra prediction mode (VIPM).

7. The method of any one of claims 1, 3 to 5 or the apparatus of any one of claims 2 to 5, wherein substituting at least one of a Sobel filter or an edge detection filter by a generic filter only applies to obtain a decoder-side intra mode derivation (DIMD).

8. The method of any one of claims 1, 4 to 7 or the apparatus of any one of claims 2, 4 to 5, wherein parameters of the generic filter are obtained from a look-up-table (LUT) using an index identifying an entry in the LUT, said LUT comprising a fixed number of filter kernels.

9. The method of any one of claims 1 or 3 to 8 or the apparatus of any one of claims 2 to 8, further comprising decoding a flag indicating whether the Sobel filter is to be substituted by the generic filter and responsive to a determination that the Sobel filter is to be substituted by the generic filter, decoding at least another flag indicating whether parameters of the generic filter are signaled in a bitstream or whether an entry of a LUT is signaled in the bitstream that identifies a particular filter kernel.

10. An encoding method comprising:

   obtaining gradients for a current block by filtering samples in a neighboring template of the current block, wherein obtaining gradients for a current block comprises substituting at least one of a Sobel filter or an edge detection filter by a generic filter;
   obtaining a histogram of oriented gradients (HoG) for the current block based on the gradients ;
   selecting an intra mode for the current block based on the HoG; and
   encoding the current block using the selected intra mode.

11. An encoding apparatus comprising one or more processors and at least one memory coupled to said one or more processors, wherein said one or more processors are configured to perform :

   obtaining gradients for a current block by filtering samples in a neighboring template of the current block, wherein obtaining gradients for a current block comprises substituting at least one of a Sobel filter or an edge detection filter by a generic filter;
   obtaining a histogram of oriented gradients (HoG) for the current block based on the gradients ;
   selecting an intra mode for the current block based on the HoG; and
   encoding the current block using the selected intra mode.

12. The method of claim 10 or the apparatus of claim 11, wherein parameters of the generic filter are encoded in a picture parameter set (PPS) or in a sequence parameter set (SPS).

13. The method of claim 10 or the apparatus of claim 11, wherein parameters of the generic filter are obtained from a look-up-table (LUT) using an index identifying an entry in the LUT, said LUT comprising a fixed number of filter kernels.

14. The method of any one of claims 10, 12 to 13 or the apparatus of any one of claims 11 to 13, further comprising encoding a flag indicating whether the Sobel filter is to be substituted by the generic filter and responsive to a determination that the Sobel filter is to be substituted by the generic filter, encoding at least another flag indicating whether parameters of the generic filter are signaled in a bitstream or whether an entry of a LUT is signaled in the bitstream that identifies a particular filter kernel.

15. A signal comprising a bitstream, formed by performing the method of any one of claims 10 and 12 to 14.

**FIG. 1**

EP 4 742 659 A1

FIG. 2

FIG. 3

CODED VIDEO BITSTREAM → ENTROPY DECODER (330) → IMAGE PARTITIONER (335) → INVERSE QUANTIZER (340) → INVERSE TRANSFORMER (350) → RECONSTRUCTED RESIDUAL BLOCKS → (+) (355) → RECONSTRUCTED BLOCKS → IN-LOOP FILTERS (365) → RECONSTRUCTED VIDEO

PREDICTION BLOCKS

INTRA PREDICTOR (360)

PREDICTION ENHANCER (390)

(370)

MOTION COMPENSATOR (375)

REFERENCE PICTURE BUFFER (380)

300

Current Frame

**FIG. 4**

EP 4 742 659 A1

Window

Current Block

**FIG. 5**

FIG. 6

FIG. 7

800

obtaining gradients for a current block by filtering samples in a neighboring template of the current block, wherein obtaining gradients for a current block comprises substituting at least one of a Sobel filter or an edge detection filter by a generic filter
/ 802

obtaining a histogram of oriented gradients (HoG) for a current block based on the gradients
/ 804

selecting an intra mode for the current block based on the HoG
/ 806

decoding the current block using the selected intra mode
/ 808

## FIG. 8

EP 4 742 659 A1

900

obtaining gradients for a current block by filtering samples in a neighboring template of the current block, wherein obtaining gradients for a current block comprises substituting at least one of a Sobel filter or an edge detection filter by a generic filter — 902

obtaining a histogram of oriented gradients (HoG) for a current block based on the gradients — 904

selecting an intra mode for the current block based on the HoG — 906

encoding the current block using the selected intra mode — 908

**FIG. 9**

EP 4 742 659 A1

| | Europäisches Patentamt European Patent Office Office européen des brevets | **EUROPEAN SEARCH REPORT** | **Application Number** EP 24 30 6876 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FILIPPOV (TCL) A ET AL: "Non-EE2: On DIMD edge operators", 35. JVET MEETING; 20240712 - 20240719; SAPPORO; (THE JOINT VIDEO EXPLORATION TEAM OF ISO/IEC JTC1/SC29/WG11 AND ITU-T SG.16), , no. JVET-AI0140 14 July 2024 (2024-07-14), XP030320379, Retrieved from the Internet: URL:https://jvet-experts.org/doc_end_user/documents/35_Sapporo/wg11/JVET-AI0140-v2.zip JVET-AI0140-v2.docx [retrieved on 2024-07-14] | 1-4,7-15 | INV. H04N19/11 H04N19/176 H04N19/593 |
| Y | * the whole document * | 5,6 | |
| X | EP 4 258 662 A1 (BEIJING XIAOMI MOBILE SOFTWARE CO LTD [CN]) 11 October 2023 (2023-10-11) * paragraphs [0007] - [0009], [0014]; figures 2,3,30 * * paragraphs [0045] - [0046]; figures 10-13 * * paragraphs [0054] - [0058]; figures 17,18 * * paragraph [0061] * | 1-4,7-15 | |
| X | WO 2024/127909 A1 (SHARP KK [JP]) 20 June 2024 (2024-06-20) * paragraphs [0001], [0085] - [0088], [0109] - [0119]; figures 9,11 * -/-- | 1-4,7-15 | TECHNICAL FIELDS SEARCHED (IPC) H04N |

The present search report has been drawn up for all claims

| Place of search | Date of completion of the search | Examiner |
|---|---|---|
| The Hague | 27 March 2025 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ...................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BONNINEAU (INTERDIGITAL) C ET AL: "AHG12: Multiple Transform Set Selection for Intra MTS", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0307 ; m67917 21 April 2024 (2024-04-21), XP030317790, Retrieved from the Internet: URL:https://jvet-experts.org/doc_end_user/documents/34_Rennes/wg11/JVET-AH0307-v4.zi p JVET-AH0307-v5.docx [retrieved on 2024-04-21] * the whole document * ----- | 5,6 | |
| A,D | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/documents/34_Rennes/wg11/JVET-AH2025-v1.zi p JVET-AH2025-v1.docx [retrieved on 2024-06-26] * section [3.1.5 Decoder side intra mode derivation (DIMD)]; figure 60 * ----- | 1-15 | TECHNICAL FIELDS SEARCHED (IPC) |

The present search report has been drawn up for all claims

| Place of search | Date of completion of the search | Examiner |
|---|---|---|
| The Hague | 27 March 2025 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6876

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | | Publication date | Patent family member(s) | | Publication date |
|---|---|---|---|---|---|
| EP 4258662 | A1 | 11-10-2023 | CN | 119278625 A | 07-01-2025 |
| | | | EP | 4258662 A1 | 11-10-2023 |
| | | | WO | 2023193551 A1 | 12-10-2023 |
| WO 2024127909 | A1 | 20-06-2024 | NONE | | |

EPO FORM P0459

For more details about this annex : see Official Journal of the European Patent Office, No. 12/82